Europäisches Patentamt

European Patent Office

Office européen des brevets

(19)

(11) **EP 1 376 948 A1**

(12) **EUROPEAN PATENT APPLICATION**

(43) Date of publication:
**02.01.2004 Bulletin 2004/01**

(51) Int Cl.⁷: **H04L 12/56**, H04Q 7/22

(21) Application number: **02254381.3**

(22) Date of filing: **24.06.2002**

(84) Designated Contracting States:
**AT BE CH CY DE DK ES FI FR GB GR IE IT LI LU MC NL PT SE TR**
Designated Extension States:
**AL LT LV MK RO SI**

(71) Applicant: **LUCENT TECHNOLOGIES INC.**
**Murray Hill, New Jersey 07974-0636 (US)**

(72) Inventors:
- **Gruhl, Stefan**
  **90443 Nürnberg (DE)**
- **Guthaus, Roland Johannes**
  **90571 Schwaig (DE)**

(74) Representative: **Sarup, David Alexander et al**
**Lucent Technologies NS UK Limted,**
**5 Mornington Road**
**Woodford Green, Essex IG8 OTU (GB)**

(54) **Quality of service scheduling for packet switched data services**

(57)     The invention relates to the scheduling in a multilayer packet switching network or system, wherein an object of the invention is to provide a flexible resource allocation, with the impact of the allocation having a minimised impact on the actual performance of individual flows.

A method and devices are proposed for improving in a multi-layer packet switching network or system quality of service (QoS) scheduling having a rate-conserving scheduling functionality based on two scheduling layers operating on two granularities in protocol data units (PDU) of at least one incoming data flow, by maintaining QoS requirements and determining a service order for the protocol data units (PDU) by the upper scheduling layer (LLC-scheduler), implementing packet switching based, in particular GPRS-based and/or EGPRS-based, constraints by the lower scheduler layer (MAC-scheduler), selecting service ordered protocol data units (PDU) on demand by the lower scheduling layer (MAC-scheduler) in dependence on these constraints, in particular for efficiently allocating timeslots for the data flows, and serving the selected protocol data units (PDU) by the lower scheduling layer (MAC-scheduler).

EP 1 376 948 A1

**Description**

Field of the invention

The invention relates to the scheduling in a multi-layer packet switching network or system to improve the scheduling of data flows based on two scheduling layers operating on two granularities in protocol data units of at least one incoming data flow, in particular by efficiently allocating timeslots for data flows which have to be transmitted.

Background Art

Considering packet switching networks with the standard ISO/OSI architecture the task of multiplexing essentially reduces the task of ordering packets and then sending them serially over a shared link. This process of serialisation is subsequently referred to as scheduling.

For certain network links, especially for wireless links and certain amount of a pre-given link characteristics have to be applied. Such a pre-given link characteristic may be for example a very specific error character of the link. This is traditionally addressed by applying segmentation on the layer-3-protocoll data units (PDUs). Then after segmentation the resulting smaller entities are scheduled in a link specific medium access layer. Since, however, scheduling of protocol data units have been already performed on the higher layer there are two subsequent schedulers resulting in numerous disadvantages if these two schedulers are de-coupled.

Typically there are several protocol layers on top of each other and each of those layers operate on protocol data units (PDUs). Based on the data flow within the ISO/OSI standard layer model for protocols, the output of one layer usually provides the input of the next layer. This model for protocols seems to be beneficial since it allows several functions to be grouped together into dedicated modules. If, however a protocol function contains scheduling this standard approach is less desirable when the dynamic behaviour of subsequent functions in subsequent layers is not predictable. Moreover, for person skilled in the art, it is obvious that it is often impossible or not advisable to restrict the providing of scheduling processes for the whole protocol stack to only scheduler.

In general an arbitrary number of individual logical data flows is given forming the basis for providing quality of the services (QoS) by means of the individual flows, each of which having a set of QoS-attributes associated.

To address the specific character of a packet switched network like GPRS (General Packet Radio System) or EGPRS (Enhanced GPRS) there may be additionally a lower link layer protocol layer that typically comprises segmentation to transmission blocks. The length of such blocks is not static but there is to allow the usage of a different coding schemes that cause to improve the operation at a certain channel condition and an experienced bit-error-rate (BER). Each block receives a header for re-assembly, a cyclic redundancy check (CRC) for error dedication and possibly an automatic retransmission request (ARQ) for backward error correction. A so called MAC-scheduler (Medium Access Control) provides these blocks for the physical layer. In case of wireless circumstances the link is a shared medium so that the physical layer typically allows for several channels.

Especially with regard to a GPRS-based network performing packet switching technology, there is a need for a scheduling functionality of deciding which packets in the system should be sent downlink (DL), i.e. in direction to the user equipment, and which packets should be requested from the user equipment (UE), such as a mobile station in uplink direction, i.e. in uplink (UL) direction to a terrestrial network elements, in particular a base transceiver station (BTS). However, since in case of wireless circumstances the link is a shared medium typically there are transmission-(or radio-)blocks that can not be scheduled due to GPRS-related system constraints, such as for example the significant restriction of addressable channels of each timeslot and/or the prior assignment of timeslots to specific data flows, as for example during the originating of a call.

Summery of the invention

An object of the invention is to provide a new and improved approach allowing a flexible resource allocation, with the impact of the allocation having a minimised impact on the actual performance of individual flows.

The inventive solution of the object is achieved by a method incorporating the features of claim 1, a network or system incorporating the features of claim 8, an apparatus incorporating the features of claim 9 and/or an implementation software product incorporating the features of claim 10.

Advantageous and/or preferred embodiments or refinements are the subject matter of the respective dependent claims.

Accordingly, the invention proposes to improve in a multi-layer packet switching network or system a quality of service scheduling having a rate-conserving scheduling functionality based on two scheduling layers operating on two granularities in protocol data units of at least one incoming data flow, by using the upper scheduling layer for maintaining QoS requirements and determining a service order for the protocol data units and by using the lower scheduler layer for implementing packet switching based, in particular GPRS-based and/or EGPRS-based, constraints and for selecting service ordered protocol data units on demand and in dependence on these constraints to serve the selected protocol data units by the lower scheduling layer, thereby allowing in particular an efficient allocation of timeslots for the data flows.

As by the implementing of system constraints in the lower scheduling layer the inventive scheduling approach is held flexible also precedence service can be supported, for example for real-time-traffic (RT-traffic) and/or QoS-traffic over best-effort-traffic (BE-traffic). Thus by using the inventive linking strategy, the upper scheduling layer, in particular the LLC-layer, maintains QoS requirements and determines service order on that level, regardless of the actual system behaviour, which is like coding schemes subject of change, while this order is maintained as good as possible for a given resource allocation.

By monitoring the achieved data throughput by the lower scheduling layer for deducting a scheduling order in dependence of that monitored data throughput it is possible to support unbalanced resource allocation between data flows, since the inventive scheduling functionality is significantly distributing the caused effects among the data flows, in particular regardless of the resource allocation of timeslots.

According to preferred refinements, the protocol data units are strictly served in dependence on definable precedence classes based on the system constraints, with at least one precedence semantics according to which protocol data units of different precedence classes being determined to be served. For further improving the flexibility it is proposed however, to give for certain protocol data units, such as data units belonging to a real-time application and/or signalling traffic preferential service.

In particular according to system specific delay requirements, it is proposed to schedule one selected protocol data unit from each data flow after another or alternatively to schedule the protocol data units from one selected data flow prior to the process of scheduling of the protocol data units from an other selected data flow.

For further reducing the time for selection and hence for improving the efficiency in particular of the lower scheduling layer it is recommend to support a pre-selection by providing for each precedence class a respective service order of selected protocol data units and/or by ordering the protocol data units respectively in dependence on timeslot allocation constraints.

The invention is further suggesting a multi layer packet switching network or system, adapted to perform the inventive method comprising at least one transceiver, especially incorporated within a mobile station and/or a base transceiver station having at least two scheduling means, preferably based on a respective software implementation, each of which is operating on a different granularity in protocol data units of at least one incoming data flow, wherein the upper layer means comprises means for the maintaining of QoS requirements and the determining of a service order for the protocol data units and wherein the lower layer means comprises means for implementing packet switching based system constraints, means for selecting service ordered protocol data units in dependence on these constraints, in particular for efficiently allocating timeslots for the data flows, and means for serving the selected protocol data units.

Thus, the invention in general contemplates using of two schedulers basing on a packet switch network or system having a transceiver unit operating on at least two different protocol layers, i.e. an upper layer and an lower layer each of which having a scheduler both of which are linked together in a novel manner to achieve a certain degree of predictable behaviour, while allowing for the usage of QoS-schedulers with rate-conserving scheduling disciplines together with the MAC-scheduler, in particular responsible for the implementation of GPRS and/or EGPRS related systems constrains, which are specifically the resource allocation of mobile stations to an arbitrary number of timeslots.

In particular, the two schedulers are operating on two granularities in protocol data units. The scheduler in the upper layer generally operates on any protocol data units PDUs. Regarding the preferred embodiments, the upper scheduling means is operating on TBFs (Transport Block Formats) and its elements, the LLC-frames (Logical-Link-Layer-frames), and hence is operating in the LCC-layer. The output of this upper scheduler is a service list of these PDUs or LLC-frames. The scheduling means on the lower layer is assumed to be the last in the chain of schedulers and hence, with regard to a GPRS or EGPRS based network is operating on RLC-blocks in the MAC-layer. Preferably, the UL and DL side are composed similarly of the linked scheduling functionality, while the signalling of UL-scheduling is combined with the DL-traffic.

Subsequently, the invention is exemplary described in more detail in view of preferred embodiments with referencing to the accompanying drawings:

Brief Description of the Drawings

FIG. 1    is showing the principal architecture of two serial schedulers with an intermediate protocol functionality,

FIG. 2    is showing a referencing model of PDU-input data into an abstract protocol function,

FIG. 3    is showing a sample referencing scheme for two linked schedulers according to the invention,

FIG. 4    is showing an UL-DL-integration with LLC-links estimation,

FIG. 5    is showing a timeslot-allocation of TBFs/LLC-Frames after a search process in the LLC-serving list according to the invention,

FIG. 6    is showing an example of a precedence implementation, and

FIG. 7    is showing an overview TS- and precedence representation of the service list according to the invention.

Detailed Description of the Invention

For a better understanding of the subsequent exemplar description of the invention in view of preferred embodiments and especially to easier ensure the improved performance of the inventive architecture, method and devices, certain requirements and assumptions are made in advance.

Basic Requirements and Assumptions

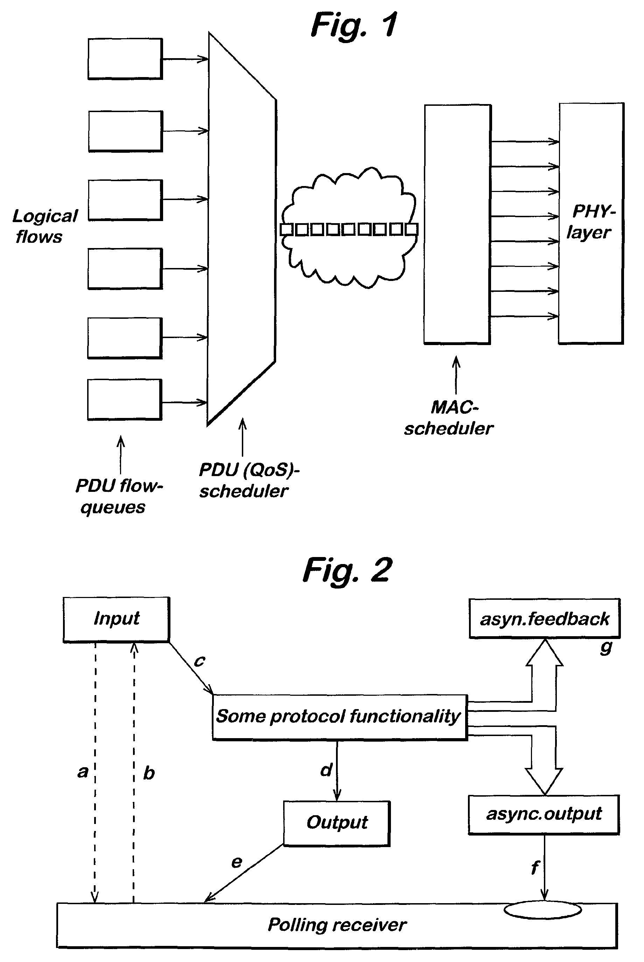

In general, regarding to schedulers linked together with a strategy based on an intermediate protocol functionally, the principal architecture of such two serial schedulers with an intermediate protocol functionality implemented there between is depicted in Fig. 1. It is assumed that the functionality allows for a view of input and output traffic plus relatively rare asynchronous output, if necessary or desired.

With regard to the protocol functionality in the direction from a higher to a lower layer a referencing model of PDU-input data into an abstract protocol function is shown in FIG. 2. As can bee seen any protocol functionality is assumed to deal with one input and the plurality of outputs. The output is assumed to have the character of one main output stream that typically is forwarded to a service access point (as indicated by reference sign f in Fig. 2)of a lower layer. However, an additional asynchronous output may also be provided (as indicated by reference sign g in Fig. 2). Such an asynchronous output may for example result from an automatic retransmission request stage (ARQ-stage) and is sent somewhere else. Thus the asynchronous output may be sent to the former SAP in the case of a retransmission or somewhere else to a higher layer to signal an unsuccessful transmission.

In particular considering a system with segmentation and backward error correction functionality, it is further assumed that the time of computation of such functionality is small enough to allow the execution on demand. This can be obtained by giving an upper bound $t_{max}$ on processing time for the maximum number of possible executions of such on-demand requests, wherein this upper bound is lower than one scheduling cycle of the lower scheduler.

It has to be noted that the working with flow timestamps, as argued for example by J. Cobb, M. Gouda and A-El-Nahas in "Flow Timestamps" Annual Joint Conference of Information Sciences, 1995, eases the estimation of processing time since the upper limit of elements in a service list of the upper scheduler can be limited to the maximum number of flows in the system.

It is further assumed that all QoS traffic is embedded into flows. A flow is seen as being a sequence of packets travelling from the same source or application to the same destination application, for example from one local base transceiver station (BTS) to a mobile station (MS) or vice versa. For one flow, incorporating for example video, speech and/or internet data, there are QoS-attributes negotiated between the network and the application. A set of constraints which is also associated with a flow might be within the network to provide such service. The number of flows in the system may be arbitrary but finite. The elements of a data flow are generally referred to as protocol data units (PDUs) and the segmented PDUs are called blocks, whereby the segmentation process preferably automatically attaches the required header and performs CRC and ARQ on it. Thus for the sake of simple description a block is considered ready for transmission once it is created.

The QoS-scheduling of the higher layer scheduler is preferably implemented by rate conserving serving discipline and typically is implemented by assigning service priorities to the packets. In principle, most kinds of scheduling algorithm yields an execution order for its processed packets. Thus, this order may be interpreted as an ordered list of execution as it is foreseen by the algorithm. This list is referred to as service-list.

Principle of linking an upper and lower scheduler

Having regard to the principle architecture of Fig. 1, the upper layer PDU-scheduler takes the PDU from the incoming data flows. The PDUs of each data flow are queued in an own first input first output (FIFO)-queue per flow denoted as PDU-flow-queue. Each such flow has constraints and the QoS-attributes associated.

The upper layer scheduler targets certain QoS goals, as for example a certain bandwidth as it is usually targeted by rate conserving strategies. Therefore, it orders the PDUs in such a way that each flow receive service not worse than a link with the specified bandwidth. This is referred to as rate/bandwidth conserving scheduling.

For overcoming the classic restriction that always the first element is getting full service and thus that there is a strict FIFO service manner on a queue, PDU-timestamps or flow-timestamps, as mentioned above and described in more detail in the afore mentioned reference "flow timestamps", and hence the contents of which is incorporated by reference hereby, could be used. Assigning a timestamp to every PDU by using PDU-timestamps could be performed on PDU arrival resulting in a function's timing associated with each PDU-arrival. As an alternative, a timestamp could be assigned to every PDU arriving within a MAC-interval. Based on the referenced citation "flow timestamps" it is sufficient to maintain one timestamp per flow and hence as long as the QoS policy of the system should not account of the inter-arrival patterns of the PDUs the maintaining of one timestamp per flow decreases the effort significantly and has no disadvantages. This is typically not desired as the flow should be threaded with regard to its flow specification and not its actual observed dynamically behaviour. Although both schemes can be used within the scope of the invention, for the following description flow timestamps are used and consequently timing issues for flow timestamps are designed.

Consequently, if a PDU from a flow has received full service by a lower layer and is thus removed from the service list and the PDU-flow-queue the next PDU from this PDU-flow-queue, if available, is then assigned a timestamp and gets ordered into the service list. Accordingly, the timing of the PDU-scheduler is driven by the serving lower layers and if there is no more PDU available from the respective flow, the flow is considered to be inactive.

If however a new PDU arrives for an empty PDU-flow-queue, this flow becomes active and needs its PDU to be scheduled and hence to be inserted into the ordered service-list. It is mentioned, that for some scheduling strategies this flow reactivation requires some flow synchronisation, wherein the timing of this event is driven on PDU arrival.

The lower scheduler serves the PDUs from the upper scheduler, wherein the order in the upper schedulers queue signals the priority in which the upper scheduler wants the PDUs to be served. By trying to achieve this priority order while obeying restrictions, the lower scheduler takes the PDUs from such a queue successively, performs segmentation into transport blocks, handles the ARQ and delivers the transport blocks for a transmission. The exemplar MAC-scheduler is proposed to be activated periodically and for most systems at a fixed MAC-scheduling interval such as for the preferred GPRS or EGPRS based network at an interval of approximately 20ms, whereas for example the interval of a UMTS based network is approximately 10ms.

While the upper scheduler can read and write in the PDU-queue the MAC-scheduler does only read and implicitly remove the elements in that queue. The reading process is synchronised in such a way, that it is assured that any reading access is performed on the queue while the queue is in a valid and consistent state. This could be implemented, for example, with a semaphore variable. According to the preferred implementation in a GPRS-based network, it is avoided that both schedulers work in an unsynchronised way which also assists to avoid such access conflicts.

Accordingly, the upper scheduler operates on the input data from layer 3, the PDUs. It receives the QoS requirements of each flow and determines the order in which the PDUs should receive service. This service is delivered by lower layer protocol functionality and incorporates namely two steps. The first is layer-2 protocol related and includes mainly segmentation of PDU to transport blocks (TB) and automatic repeat request (ARQ). The lower MAC-scheduler serves the PDUs from this list and tries to reflect the order in the list while also taking power constrains into account. To allow for the linking of the two schedulers the intermediate protocol functionality, as depicted as cloud in FIG. 1, has to allow for certain implementation as described below.

Since according to the invention any protocol functionality is defined as operations on data packets, these operations may comprise for example an alteration of the packet size, and the content and/or the creation of new packets and are initiated by the arrival from an input source or from another event as for example an interval time out. A method for actively requesting some output can involve the providing of an input and the subsequent waiting for the output or the providing of a clock that triggers internal functionality. Additional synchronous output may occur as well.

As stated above, the functionality according to the preferred embodiments mainly consists of two processes namely the segmentation and ARQ. Furthermore, additional smaller tasks, which are for example the creation of headers or CRC creation, substantially forming traditional functions on packets, that only alter the content of one packet and can easily be integrated.

Regarding Fig. 2 and based on the afore mentioned assumptions, the order of executions of the two schedulers is changed to a scheme of two schedulers forming a polling lower layer and an upper layer which provides the input. Thus, according to the invention a linking of the two schedulers is proposed enabling a delivering of merely such an amount of data that the polling lower layer, such as the MAC-Scheduling means, wants to process. In other words the scheduler on the lower layer provides resources that will have to be filled by the higher layer(s). The principle scheme between a delivering upper layer and a polling receiver on a lower layer regardless of the actual implementation of the polling/delivery mechanism is depicted in FIG. 2, with a principle inter-layer referencing scheme preferably as following:

  a) In a initial step "a", reference to the input is giving to the polling receiver;
  b) When the receiver polls for new input it puts out a request to the input via the reference. The input might be an actual PDU, the serving-list or a controlling entity that can match QoS requirements and constraints to some PDU-selection. By some means or other, there will be a decision in a favour of a flow or PDU;
  c) The input in means of a PDU is delivered to some protocol functionality;

d) This will lead to some output. Preferably the inventive implementation is supporting a mechanism that support that this output is well suited to match into the provided resources from the polling lower layer;

e) This output is then taken by the receiver to fill its resources;

f) In case the such encapsulated protocol functionality could generate asynchronous output which has to be expected by the receiver, the receiver additionally may provide a separate SAP for such asynchronous output;

g) There should also be an SAP offered by the higher layer to allow the encapsulated protocol functionality to signal to the higher layer. Such a signal for example could be the notification of an unsuccessful attempted delivery.

Preferably the handling and inputting of a PDU to the protocol functionality is assumed to be one step. Furthermore, an essential reason for distinguishing the steps of outputting, according to point d) of FIG. 2 and of delivering to the polling receiver, according to point e) of FIG. 2 is based on the fact that the actual polling can happen on a different time scale and thus to allow for various implementations of this timing aspect. There could be for example one delivery performed and a sequence of poll requests of segmented blocks.

With a given polling of protocol functionality as exemplary depicted in FIG. 2 the both schedulers in principle may be linked together.

Thus, regarding the exemplar but preferred embodiment of a GPRS-system and based on the above mentioned fundamental scheme of using protocol functionality on demand for the inventive linking strategy, the logical-link-control-layer (LLC-layer) comprises the means for performing the PDU-scheduling and accordingly the MAC-layer comprises the means for performing MAC-scheduling. The intermediate protocol functionality is formed by the radio-link-control-layer (RLC-layer) having as main functions the segmentation and the ARQ. Nowadays, there is a maximum of eight timeslots (TS) in GPRS-systems for each carrier frequency and several carriers are threaded independently of each other, as there is no multiplexing between carriers possible. Therefore, scheduling is restricted to a single carrier system and other carriers are served by own schedulers.

Specific assumptions for allowing flexible resource allocation

Based thereon, and for allowing the inventive flexible resource allocation by using the MAC-Scheduling means for implementing the system constraints, preferably it is further provided that in case of applying ARQ for a flow, the number of RLC-retransmissions is significantly lower than the successful transmitted RLC-blocks which implies, that a Coding-Scheme (CS) selection works well. However, this may be a lethal assumption for any kind of wireless transmission, since the erroneous connection is usually suspended if it fails.

Furthermore it is provided, that admission control and resource allocation of TBFs to timeslots are made in appropriate manner, preferably in such a way the bandwidth guarantees can be fulfilled by the LLC-scheduler, i.e. that the total applied load to the system is not more than its average capacity.

Regarding the processor system it is proposed to use a single processor system, so that all described protocol functions are located in one network element and all operations are performed serially on the local data. In particular, it is proposed to use an so called iPCU-architecture for the packet control unit (PCU) enabling a close coupling of the MAC-scheduler and the LLC-scheduler. This seems to be important for allowing intermediate access from the MAC-scheduler to the LLC-queues. However, extensions towards a distributed implementation also are possible but not explicitly described.

Furthermore, for the practice an ideal core network is suggested with no negative impact on QoS. Preferably, all DL-LLC-frames are available in the LLC-queues as "fast as possible". In other words, according to the preferred embodiments, the GPRS-system is not designed to compensate for undesired queuing effects in the backbone network and a flow-per-flow-control is assumed. If this is not provided, the system works fine but can not provide end-to-end-QoS.

In addition, it may be possible that a flow constitutes further constraints, than the ones that is explicitly addressed by the invention and described in the following. However, it is proposed that this should occur "rarely" to avoid negative side effects on the performance of the inventive methodology. Thus, continuity constraints, i.e. the constraints related to timing, preferably have a reasonable large interval to have no noticeable impact on bandwidth estimates of a timeslot TS.

Regarding next influential components and how these components influence scheduling.

Radio Resource Allocation

Coding schemes

Concerning the above mentioned selectable coding-schemes (CS) it is noted that a GPRS-system features four different CS, whereas an EGPRS-system for EDGE (Enhanced Data rates for GSM Evolution) has nine different CS. They allow RLC/MAC-blocks of different size to be transmitted on one timeslot within the MAC-scheduling interval, called block period, of approximately 20ms and may be dynamically selected to adapt the coding, in particular the forward error correction, to the current radio conditions, as known for a person skilled in the art.

Since however, an altered coding scheme results in significant changes in effective bandwidth for this particular link, for QoS services it is provided that resource allocation applies a pessimistic view and always assumes the lowest capacity from coding scheme-1. Thus any changes will result in gained additional capacity for one particular link. However, this non-deterministic behaviour is not desired, i.e. the fact that the quality or capacity of the channel can not be controlled by the scheduling means, but only results from unpredictable radio conditions. Thus to achieve an overall gain in bandwidth for all services this gain in capacity is proposed to be available to all services, at least those that technically could benefit from a CS-selection. These are preferably all flows that are allocated to the timeslot, where one link sees a higher coding scheme for its link. With the inventive approach providing certain channel transparency, any kind of isolated CS-selection algorithm for a particular link is allowed and the benefit in bandwidth preferably is available to all links. In other words, a coding scheme selection is for the benefit of the network providing a kind of transparency and not for the individual subscriber. It is noted that any retransmissions preferable are dealt in the same way, i.e. a retransmission does not count as consumed bandwidth for an individual flow.

Moreover with regard to a QoS aware system, the CS-selection itself has to be considered with regard to the impact to the inventive approach. Usually an optimistic algorithm for CS-selection results in higher probabilities of erroneous transmissions. However, for the most applications the achieved frame error rate (FER) will be sufficient, especially when considered with an RLC-ARQ mechanism. For QoS-flows with reasonable high FER-requirements and high delay requirements, such as real time-services for example, the CS-selection may influence the QoS and thus has to be adapted in some cases. In particular it is proposed to do CS-switching with regard to the FER- and/or delay/jitters requirements, wherein for specific cases the algorithm for CS-selection can be altered such, that the selection of higher a CS is made more conservatively, i.e. that it results in a better forward error correction based on a better coding. As a consequence the modification to the module responsible for the CS-selection preferably is based on the flow's QoS characteristics, wherein in substantial three classes of traffic can be identified.

Firstly, non-real-time traffic (NRT-traffic) having no constraints on the delay requirements.

Secondly, real-time traffic (RT-traffic) having high constraints on the jitters/delay requirements, such that it is impossible to meet the delay requirements by backward error correction.

This real-time traffic can be divided in two subclasses, according to which the first one is based on the assumption that the QoS-specification has no frame error rate requirements or these requirements are so low, that it is safe to assume that the module responsible for the CS-selection automatically selects an appropriate CS to meet that frame error rate. The other one of which can be based on the assumption that the QoS-specification has higher frame error rate requirements than the frame error rate which can be statistically expected from the CS-selection algorithm.

According to the preferred refinements it is proposed to alter in case of the last subclass the former CS-selection which usually does not account for the special requirements of real-time traffic. This can either performed by notifying the module responsible for the CS-selection about demanding of FER RT-traffic for guiding the selection of a "safer" CS-selection-algorithm in order to meet the FER-requirements. When the specific CS-selection algorithm is able to adapt itself to experienced channel characteristics and can drive the system to a defined target-FER that module is preferably notified about the flow's requirements and the achievement can be left to the module. In the most pessimistic approach this would lock the selection to only CS-1, with regard to a GPRS-based network, to provide best possible FEC.

Timeslot allocation

With regard to the timeslot allocation, usually a GPRS multi-slot mobile station can be allocated during TBF establishment or later during a resource re-allocation to timeslots. Such allocation however, is restricted by the mobile's multi-slot capabilities. For the following description it is proposed that each flow can have any timeslot assignment on one carrier, while there is in general different allocation for the DL-channel and the UL-channel. For half-duplex mobile stations, the timeslots are likely restricted to four. Due to the shift of four timeslots between UL and DL, the mobile station still either sends or receives at one instance in time and hence always the same timeslots are used.

It is to be noted that the specific algorithm used for the allocation strongly determines the actual achieved power of the inventive scheduling-approach. To minimise the impact of the scheduling approach on the resource allocation for enabling a good resource allocation-development these two systems are preferably de-coupled in such a way, that the resource allocation has influenced on scheduling but not vice-versa. As a consequence the inventive scheduling approach is preferably designed to work regardless of the resource allocation but will monitor effectively achieved throughput and from there deduct the scheduling order. As a result thereof, it is possible to do any kind of unbalanced resource allocation between two flows and the scheduling means will level out these effects as far is possible. For example, two flows can have the same bandwidth while one of them has only one timeslot, based for example on a respective bandwidth of 8 kbit/s, and the other has four timeslots, while one of the four timeslots is the same as the timeslot of the other flow. As explained in more detail below, the preferred inventive scheduling approach will automatically always occupy the shared timeslot to the single timeslot flow while the remaining three timeslots will be used to satisfy the second flow. The delay of the multi-timeslot flow will be way better for most arrival patterns but the average bandwidth can still be achieved for both flows.

Precedence classes and precedence semantics

Furthermore, according to the preferred inventive implementation within a GPRS-system, there are five precedence classes defined for GPRS. Even if a precedence QoS-requirement is not an absolute requirement towards the network, it is a notation for relative service differentiation. This is for example desirable for signalling traffic. Thus according to the preferred embodiments it is provided that signalling traffic carries highest precedence and hence, should receive highest precedence service. Furthermore, precedence classes are also useful to support some service differentiation in the packet backbone, especially if there is no per-flow QoS differentiation available.

As a consequence for deducting an appropriate service discipline it is proposed to define precedence semantics in advance, wherein two kinds of semantics, i.e. strict and burst precedence semantics, are considered in the following.

Regarding strict precedence semantics, any PDU from precedence $class_i$ must only be considered to receive service if there is no schedulable PDU from precedence $class_j$, with $i>j$. A PDU is referred as schedulable, if all other constraints for the PDU hold.

In contrast thereto, soft precedence semantics means to allow a flow to only temporarily receive strict precedence type of service. This especially is desired to address bursty traffic sources. These would then temporarily and only for a limited amount of bandwidth receive precedence service, while the rest of the system should be protected by excessive traffic of these sources. Therefore, so called burst-precedence semantics is introduced as semantics, which grants strict precedence to a service while its traffics obeys policing rules.

Hence, regarding burst-precedence semantics, any PDU from precedence $class_i$ should only be considered to receive service if there is no schedulable and flow compliant PDU from precedence $class_j$, with $i>j$ and with a PDU called flow compliant, if it is part of valid arrival pattern according to its flow specification.

For implementing the inventive scheduling behaviour for RT-services, a scheduling discipline based on precedence is useful as it allows immediate response upon the arrival of a LLC-frame. Therefore, RT-services are preferably mapped to a precedence class with burst precedence semantics to guaranty interleaved RLC-block scheduling for such services. Furthermore burst semantics can be assured by a policing means, which basically has to show two different actions, when active. Excessive packets can be dismissed or getting relabelled to lower precedence class. The latter is desirable at low overall system load, where the packets could have been serviced, while dismissing packets is advisable, when the system may assume that the packets would otherwise arrive too late to be of any use for the RT-application.

Linking strategy and tasks of the two scheduler

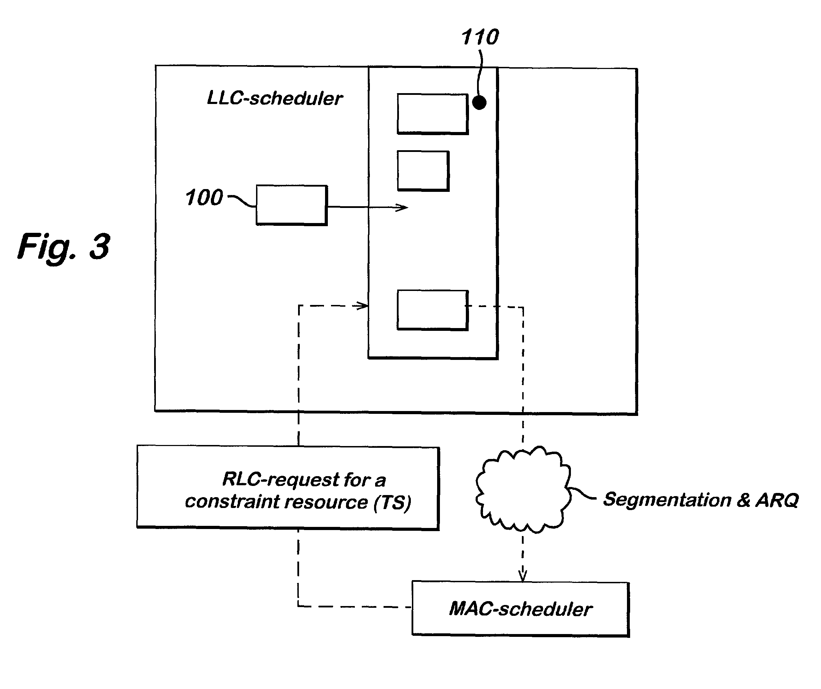

Thus, using the above described overall architecture of the two linked scheduling means each of which is operating on a different granularity in PDU, a general sample referencing scheme for such two linked scheduling means is depicted in FIG. 3. Based on Fig. 3 the scheduling means on the lower layer is operating on RLC-blocks in the MAC-layer, whereas the upper scheduling means is operating on TBFs and its elements 100, the LLC-frames, and hence is operating in the LCC-layer. The output of this upper scheduler is a service list of these PDUs or LLC-frames. Preferably, the UL and DL side are composed similarly of the linked scheduling functionality, while the signalling of UL-scheduling is combined with the DL-traffic.

With regard to FIG. 3 it can be seen, that while the upper LLC-scheduler is able to operate on its service list 110, for example by inserting LLC-frames 100 into the ordered service list 110 of scheduled LLC-frames, the MAC-scheduler is able to request RLC-blocks while certain constraints have to hold. Once a decision is made which PDU or PDU-flow shall receive service, it is polled as described with regard to FIG. 2.

The output receives the required protocol functionality and is passed to the MAC-scheduler. This results in GPRS-RLC specific protocol operations, in particular the segmentation and ARQ by the protocol functionality, depicted as the cloud in FIG. 3, wherein segmentation is performed with respect to the reasoned CS-selection and ARQ is done for both flows that receive the backward error correction, which usually is not applied for real time-services. As described with regard to FIG. 2, the MAC-scheduler also may provide an extra input for asynchronous output involving for example the signalling and ARQ retransmission.

Based on a duplex communication system as GPRS or EGPRS with data travelling in both directions, scheduling for both directions, i.e. in UL and DL is required. In GPRS the UL-traffic is polled from the base station of the network in such a manner that the UL-traffic from the next mobile station is always signalled in the DL-traffic blocks on the same timeslot. In this regard mobile stations are addressed by a so called UL-state flack (USF), ranging from 0 to 7 allowing for the maximum of eight mobiles stations to camp on one timeslot. The available UL-traffic is notified by the mobile stations mainly in two formats. There is the plain indication that their is an unspecified amount of traffic to send. This is likely to be used for continuous data flows and/or for mobile stations with a very simple implementation. Otherwise the mobile stations will announce the amount of traffic volume in octets. In current networks there are two access procedures specified, namely a one-phase access and a two-phase access. In both cases for central UL-scheduling in the base station there is either none information about the traffic volume or only the information about total traffic volume available. Single PDUs with individual sizes are not recognised by the base station. Accordingly, the DL-scheduling means can not be directly transferred to the UL-side and hence, it is proposed to adopt the DL-scheme as far as possible and to create a similar picture for the UL.

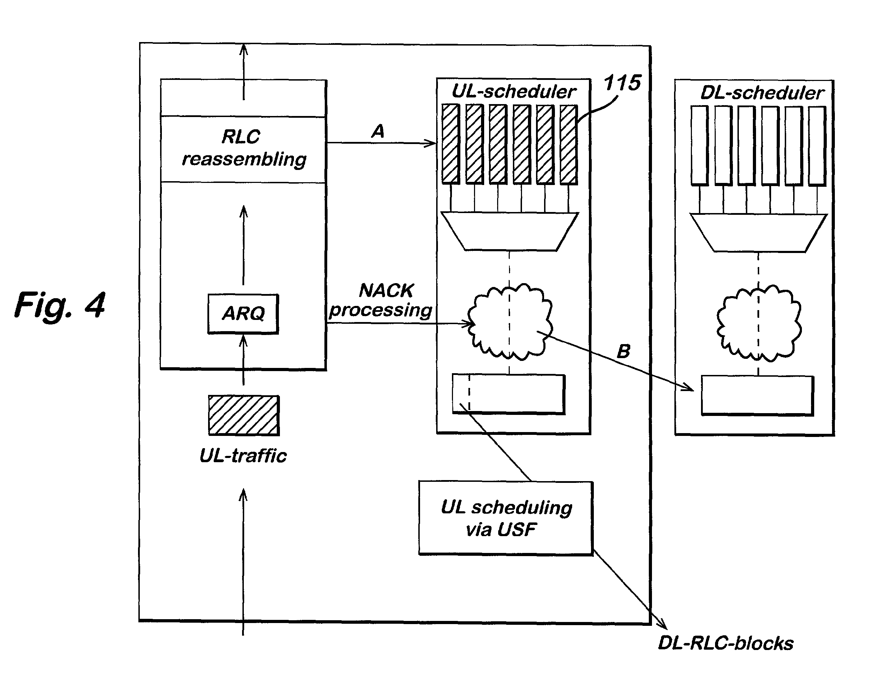

According to the inventive approach there is no need for the information about the total number of octets for the scheduling. Thus as can be taken from FIG. 4, showing an inventive UL and DL integration with a LLC-length estimation, the LLC-queues 115 within the UL-scheduler are to be viewed as virtual queues with unknown length. For the first LLC-frame an estimated value is assumed, wherein for the further blocks the estimates can improved, in particular by using the respective last received LLC-frame length. At least for continuous traffic this helps to compensate for the initially estimated value.

This is mainly based on the assumption that a delayed calculation of the scheduling discipline by one LLC-transmission is acceptable and provides a useful approximation for a bandwidth conserving scheduling discipline. Therefore the actual LLC-length is signalled to the uplink-scheduler from the RLC-reassembling-unit, as indicated by arrow A in Fig. 4, after each completed LLC-frame.

Furthermore, the UL-ARQ stage needs a downlink-channel to correspond with the sending mobile station. As a consequence it is proposed to have another input for the UL-scheduler for this traffic. However, this can be explicitly modelled within the intermediate protocol functionality, depicted as cloud , in FIG. 4 or if this output is covered by a general propose queue.

In general, all uplink-scheduling is signalled to the mobile station via the USF, by applying the USF to the DL-MAC blocks, i.e. the DL RLC-blocks, whereby however some DL mechanism can block the USF-transmission (RRBP) and hence the UL-scheduling means will only compute a new USF for such block periods which are not yet assigned to other mobile stations.

Furthermore, some DL-services use ARQ. Thus when the ARQ window runs full it issues a RRBP (relative preserve block period) DL-packet, which is the request for an UL-ACK/NACK. This indication is piggybacked to the DL-packets, as indicated by arrow B and thus does not influence the DL-scheduling. After a fix offset (in MAC-block periods) the receiving mobile station will send this requested ACK/NACK in UL-direction so that a scheduling of an UL-transmission via USF for the same block period is not necessary.

For the integration of the RRBP-mechanism preferably a separate RRBP-list for each timeslot is provided to remember issued RRBPs. The respective UL-timeslot will then have no USF assign and hence an UL-transmission is not possible. For the sake of simplicity any ARQ mechanism is granted to issue RRBPs regardless of the UL-traffic. For future specifications it may be possible to schedule the RRBP requests for multi-slot mobile stations on certain timeslots. For currently networks however, it is proposed that this decision is left to the ARQ. Also the time, when such request is scheduled, may be viewed as scheduling decision for the UL-traffic. The exact timing and allocation of RRBP to a specific timeslot however is not described in detail.

Regarding the upper LLC-scheduler in more detail, there is exactly one FIFO LLC-queue dedicated for every established TBF, which are scheduled regarding their QoS requirements. Therefore the representation of an ordered list is maintained and two different representations are preferably outlined and are discussed with regard to their advantages. In this regard any rate conserving scheduling policy can be applied, see for example Hui Zhang, "Service Disciplines for guaranteed Performance Service in Packet-Switching Networks", Proceedings of the IEEE, Vol. 83, No. 10, October 1995, such as Waited Fair Queuing (WF$^2$Q) or Virtual Clock Queuing (VCQ) for example.

As, discussed above, the ordered list may typically consist of timestamps or some other representation of a priority in which the bandwidth conserving algorithm wants the LLC-frames to receive service. However, while in fixed link point-to-point connections there is a constant link capacity and there are no constraints on the MAC-traffic, this does not hold for GPRS. Therefore it is only spoken of a service priority request, because multiple reasons can make such service impossible, for example when the timeslot is currently occupied by retransmission.

As a result, the output of the LLC-scheduler comprises a desired serving order for LLC-frames by the MAC-scheduler. This order is traditionally implemented by ordered list that receives FIFO-style service by the MAC-scheduler. This representation for timeslot-allocation constraints and delays constraints will be covered In a following description part.

Regarding the MAC-scheduler, it serves the LLC-PDUs from the LLC-scheduler, the order in the LLC-scheduler's queue signals the priority in which the LLC-scheduler wants the LLC-PDUs to be served. The MAC-scheduler tries to achieve this order while obeying the following restrictions:

- Exactly one LLC/MAC-block has to be scheduled on each timeslot. If however no suitable blocks are available, then "empty" blocks are sent.
- Delay constraints driving the decision how many subsequent transmissions spread over several timing intervals are tolerable to obey timing requirements of the served PDU.
- ARQ-constraints defining that a transmission of RLCs that receive ARQ-service is only possible until the ARQ-windows size is reached. Further transmissions are possible only after the ARQ-stage receives the acknowledgement from the receiver. For GPRS acknowledgements are actively requested via RRBP. In case such requests are lost, or not answered in time, this constraint should be monitored.
- With regard to further constraints, delay constraints are accounted for by two mechanisms. A congestion related delay for the base station mobile station bottle neck is accounted by average/peak bandwidth. Each flow finds itself on an isolated link with a guaranteed bandwidth, thus as long as the flow remains compliant to bandwidth specifications, it will not suffer from congestion related delay when a moderate resource allocation is used. The second mechanism is service differentiation by precedence, which specifically addresses hard delay requirements as for example found in RT-services. The mapping of delay requirements to precedence classes is part of the resource allocation and thus will be not described in detailed.

For the concurrent scheduling of several LLC-frames it is possible to mix or interleave individual RLC-blocks from several LLC-frames on a timeslot. The invention proposes an estimation of average transmission times for LLC-frames and deducts from there an optimised scheduling.

Firstly a common technique of (weighted) Round-Robin scheduling in the MAC-layer is forming the bases. Here the RLC-blocks are scheduled in the MAC-layer in Round-Robin fashion, i.e. one RLC-block from each flow after another. Thus, the RLC-blocks of several LLC-frames are logically "interleaved". An estimated average delay for one LLC-transmission of #TBF-flows, while each flow has exactly one LLC-frame to transmit is preferably expressed as follows:

$$Avg\_Dly = \sum_{i=1}^{\#TBF} PDUlen_i + 1 - i, \qquad \text{equation 1}$$

wherein Avg_Dly indicates the average delay and $PDUlen_i$ denotes the length of the i-th LLC-frame.

Alternatively a PDU-sequential-scheduling may form the bases, i.e. one LLC-frame is scheduled completely before the next LLC-frame's RLC-blocks are scheduled. In this regard it is provided that the LLC-scheduling sequence follows the TBF number starting from 1. This implies that the scheduling order on LLC-levels influences the average delay. Regardless of this actual order the estimation may expressed as:

$$Avg\_Dly = \frac{\sum_{i=1}^{\#TBF} \sum_{j=1}^{i} PDUlen_i}{\#TBF} \qquad \text{equation 2}$$

This intuitively reduces the average transmission delay, whereby for LLC-frames of equal lengths it can be assumed that the Round-Robin scheduling average delay grows by #TBF while the LLC-sequential scheduling grows by #TBF/2.

Thus LLC-sequential scheduling is beneficial in means of average delay and is thus desirable. The preferred implementation software do incorporate this behaviour for all flows were desirable. Desirable means, that the LLC-frames are considered to be of equal importance for the system. This holds for LLC-frames of the same precedence class, because these have the same importance and thus it is preferred to operate with optimised delay. Packets of different precedence classes are treated as covered by their precedence semantics and it is not sensible to restrict the scheduling of their RCL-blocks.

It has to be mentioned, that the length of a transmission is computed in number of required MAC-scheduling intervals and, of course, every LLC-frame contains at least one RLC-block.

Implementation of Constraints

The preferred embodiments of the inventive approach of the link schedulers automatically implement the sequential LLC-scheduling. The selection of which LLC-frame has to be transmitted is made by the LLC-scheduling means and put in the service list. The constraints guide the selection of LLC-frames. In the following description part it is described how the serving list can be represented to achieve efficient performance. Therefore, the afore discussed constraints are taken into account when building the serving list in order to support efficient access. The read access however, happens on RLC-removal and hence, often, while the LLC-insertion occurs relatively rarely.

Implementation of TS-allocation constraints

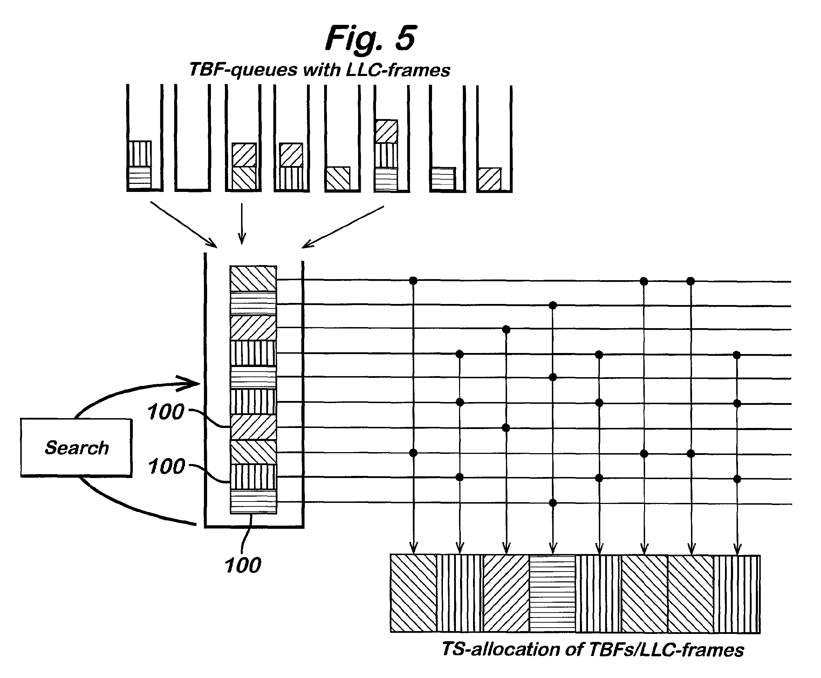

As mentioned above, the LLC-frames 100 may be stored in one common ordered list, whereby all elements are subject of constrained investigation on access of the MAC-layer. Especially for the constraint of the timeslot allocation, it thus could happen that a lot of PDU-frames are accessed, because no prior PDU-frame did fit to the currently polled timeslot. According to FIG. 5, showing a timeslot allocation after a search process in the LLC-serving list, the array of arrows indicates which LLC-frame 100 can be scheduled to which timeslot, with respect to the flow's timeslot allocation, as identified by the respective structuring. Where are no other or earlier LLC-frame allocates a timeslot, a LLC-frame is scheduled to the according timeslot. The picture according to FIG. 5, however, may change every MAC-scheduling interval.

However, for the implementation of TS-allocation constraints also may use multiple serving-lists.

As ca-n also be seen in Fig. 5, the LLC-frames are stored with respect to the timeslot-constraints on the TBFs. In particular, this can be done with eight separate ordered lists, with one list for each timeslot. Hence it can be guaranteed that the first element is always compliant with the timeslot-constraints of the MAC-access. This helps to reduce the formerly non-deterministic effort to find a matching LLC-frame in the LLC-list.

Thus as an preferred implementation eight lists are provided. The insertion of a LLC-frame can then be extended to the insertion of the element into up to eight independent lists, depending on the timeslot allocation of the TBF. The storage in the serving list is via reference. The deletion of one element in one list has to performed with that element in all other lists as well. This can be achieved by double linked list of these elements. A read access from the MAC-layer would always be routed to the associated list for the according timeslot. This multiple-queue solution is proposed for the embodiments throughout the following description and is depicted together with the precedence constraints in a following paragraph.

Since LLC-elements consist for realistic LLC-size of several RLC-blocks, there is much more read access from the MAC-scheduling means to the LLC-list than write access for LLC-insertion. Therefore, the preferred approach with individual timeslot serving lists may be of significant benefice.

Other reasons to impact the performance of both alternatives are how many concurrent TBF-flows are expected in the system and what multi-slot capabilities will be found in future mobile stations and how will they be used by the resource allocation mechanism. The evaluation of the two alternative representations however is not described in more detail.

Precedence classes

As mentioned above, there are five precedence classes defined for GPRS. Their semantics are not fixed by the standards, but leaves the interpretation of precedence, i.e. the applied precedence semantics to implementation. The definition of such interpretation can different but any of such interpretation does map into the inventive approach. Thus for the representation of such constraints a proposal is described to achieve strict precedence and also burst precedence, as above-identified.

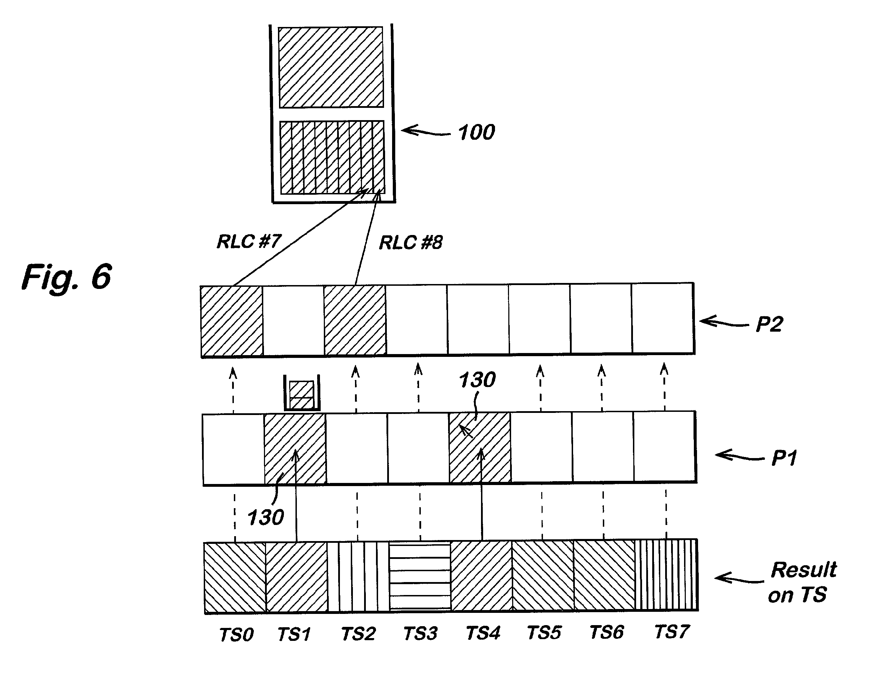

Accordingly, for the implementation of RT-services there are typically hard delay constraints. To address these entirely by bandwidth reservation usually leads to bandwidth over-reservation and thus to lower link utilisation. Resource allocation for RT-services is strictly based on bandwidth and therefore is significantly harder. To ease this problem for resource allocation the inventive approach supports RT-services in the scheduler by precedence. By doing so the resource allocation functionality can rely on this precedence support and thus assume timing guarantees for RT-traffic over other traffic, such as a lower precedence traffic, regardless of any arrival patterns or system load. According to the example as depicted in FIG. 6 showing an example of precedence implementation, there is precedent traffic in precedent class 1, identified by reference sign P1, which blocks other traffic in precedent class 2, referenced by P2 in Fig. 6. On timeslot 1 TS1 and timeslot 4 TS4 precedence RLC-blocks 130 are scheduled. Although a segmented LLC-frame 100 is assigned to timeslot 1 TS1 as well, there is no RLC-block request issued and thus in the exemplar example to adjacent RLC-blocks #7 and #8 are scheduled on timeslot 0 TS0 and timeslot 2 TS2.

With regard to the preferred adjusting of precedence semantics for RT-services, it is mentioned that likely the burst precedence semantics is desirable if precedence is used to support RT-services. This is based on the assumption that the resource allocation wants full precedence for the RT-traffic during reasonable short burst periods. To protect the rest from the system from excessive resource consumption of one precedence flow, it can be advisable to restrict the precedence semantics to a reasonable label, such as for example to the above defined burst semantics. Thus according to the preferred refinements it is suggested to have a dedicated flow policing functionality for each precedence flow. During congestion situations the policing functionality will limiting the available capacity for the otherwise dominating RT-flows. This can be done by having bandwidth excessive packets dismissed or scheduled with lower priority.

It is mentioned that re-labelling of packets of different precedence flows inherently leads to a mixed arrival order at the receivers side. Most RT-applications can cope with this, but it is worth to mention that the feasibility should be further evaluated. With the proposed preferred approach, the introduction of burst semantics does not change the scheduling functionality itself but only requires additional policing functionality and/or modules.

Combination of TS and precedence constraints

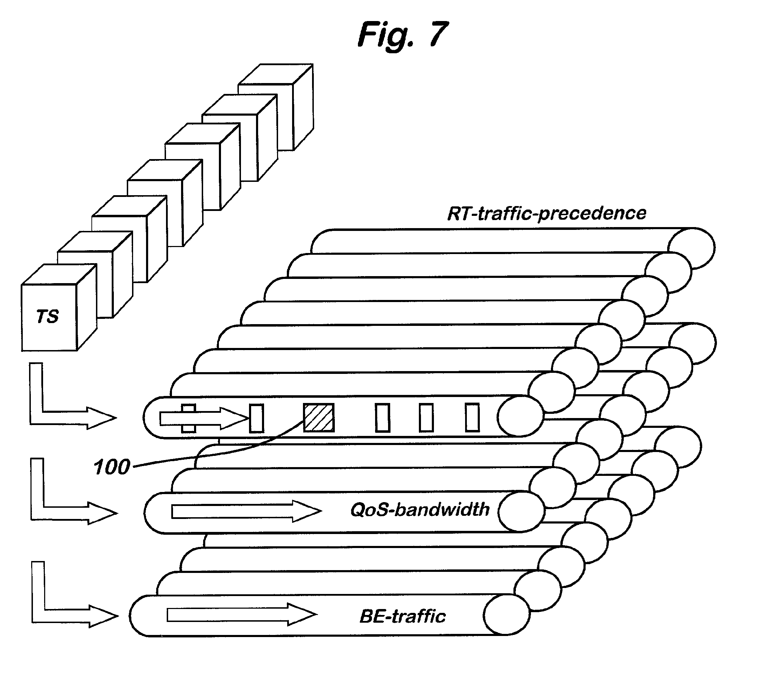

With regard to the combination of timeslot constraints and precedence constraints, FIG. 7 depicts an overview timeslot and precedence representation of the service list.

One dimension of the service list depicted as the upper pipe with rectangles representing the LLC-frames 100 is its order by the timestamps from QoS -scheduling, depicted by the from the left to the right.

A second dimension, depicted to the back of the picture is the timeslot allocation.

The third dimension is the precedence class, shown as layers. The arrows show how a search process for the first timeslot TS will look like. It will search the service list and use the order of it, i.e. simply take the first element. If there are no packets for the highest prioritised precedence traffic class available the search continuous with the next layer, i.e. precedence class. In the example according to FIG. 7 this could be QoS-traffic, which has no stringent real time requirements and thus can cope with short interruptions from RT-sources, but which is important over BE-traffic (best effort traffic), i.e. traffic relating to a minimum QoS service class, which is achieved by any scheduling strategy where packets pass the scheduling entity without getting lost. Thus finally, packets in the BE-traffic class receive service.

It has to be mentioned, that the computed order of LLC-frames in BE is still able to reflect a fairness among the BE-flows, if there are different bandwidth requirements made for the individual flows. If this service differentiation is not required also BE-traffic can be considered to be in the last precedence class and carry the least important timestamp, i.e. be last in the service list. This removes the BE-layer and thus helps to gain some efficiency but lacks the fairness among BE-traffic.

Continuity constraints

Regarding next the continuity constraints, all timing constraints that state a minimum serving rate at given intervals as continuity constraints are summarised and can be found when certain algorithms have special requirements to an individual flow. This can be for example a power control algorithm that works best with at least one radio-block transmission per monitored link and monitored time-frame. Another examples are time-out mechanisms, such as for example for TBF-control.

To address continuity it is advisable to have a separate agent controlling these constraints. When a flow should receive service it is assigned temporary high priority. This can be done by using some precedence mechanism. After the flow has received some defined service the flow is re-classified into its former position. Arguably this constraint introduces a certain amount of unpredictability. Based on the assumption that a flow may have constitute further constraints than the ones explicitly addresses, it can be argued that this should be that little traffic to still allow to achieve a QoS-system behaviour. Furthermore, there is likely more uncertainty imposed by coding scheme switching.

If necessary, the additional resource consumption in means of bandwidth for such continuity constraints can also be calculated, in particular by having this traffic subtracted from the formerly assumed timeslot capacity.

Further constraints

However, there can be further constraints, which are not exactly known and thus can not be advised on a specific service list representation or serving mechanism to explicitly address those. However, in the worst case the service list with the chosen representation to address all former constraints has to be fully search. As this introduces inefficiency this should be generally avoided. It can be acceptable if the effort can be estimated to be low. Thus a special class of constraints preferably is identified that may be called excluding constraints. These are constraints that exclude a specific LCC-frame from the MAC-scheduling due to special reasons. These constraints must occur rarely as given in the afore mentioned assumption concerning further constraints. Then, excluding constraints can be considered to allow for efficient implementation, as it is estimated that most access to the service list successfully finds a schedulable LLC-frame and only rare cases of such access are unsuccessful.

For UL-DL integrated scheduling half-duplex, only mobile stations could impose additional constraints. Many GPRS-supporting mobile stations are expected to have only one radio frequency section which enables them either to send or receive on a timeslot. For up to four-slot multi-slot capable units these can be achieved by clever resource allocation of only adjacent timeslots, which allows for the usage of four timeslots in both directions simultaneously due to the shift of four timeslots between the UL and DL. The mobile stations for more timeslots should technically support duplex mode. If there are mobile stations that do not so, this could be another example of constraints. In this case no UL-traffic can be scheduled for DL-traffic on the same instant in time.

Implementation

In the following a preferred implementation of an algorithm is proposed complying with the implemented constraints in a strait forward manner.

A sample algorithm

According to the above description an upper number of maintained flows in a system is provided and a handle for each flow *(FLOW)* is given. Every PDU in the inventive designed system also have a unique identifier called *PD.U.* The currently required segmentation size for each flow can be retrieved at any time and is stored for each flow in *FLOW. segsize.* Independently to the data flow there is an entity in the system which can change this value dynamically. For the exemplar system it is provided that PDU's can arrive asynchronously at any time and be stored in a PDU-flow-queue. There is one for each established TBF.

Firstly the timing behaviour of the two scheduling means is described and than a data flow from the input of the PDU to the PHY-layer is forming the bases, resulting in the following preferred sequences:

After initialisation go to *WAIT-STATE.*

In *WAIT-STATE:*

A MAC-interrupt is made when the PHY-layer requests the RLC-blocks from the MAC-scheduler. This occurs periodically, such as in GPRS-based networks approximately every 20 ms. On this interrupt the following sequence is performed:

1) Delivering of the scheduled RLC-blocks to the PHY-layer, that instantly satisfies the PHY-request and
2) Initiating of the scheduling functionality for the next block period and hence PDU-scheduler's function has to be started by running the sequence: *New_PDU* service.
3) After finishing *New_PDU* service, the *MAC-scheduling* functionality is started.

It has to be mentioned however, that it is possible to shift step 1) to the end, if it can be guaranteed that all other scheduling actions can be executed in a guaranteed and satisfying time period. This additionally improves the transmission delay of late arriving high priority PDU's.

*Arrival of a PDU:*

At some time newly arrived PDUs have to be brought to the PDU-scheduling system. If the system allows for synchronization mechanism this be done concurrently on PDU-arrival in a queue. A more general approach is to do this step always before a new MAC-scheduling cycle is started.

When a new PDU is received, it is put in the corresponding flow-queue. If this queue was empty before, the flow becomes active through the arrival of that PDU and hence the flow is inserted in a list of activated flows, which require synchronization.

*New PDU:*

The list of activated flows contains all flows, for which a PDU arrived within the last MAC-scheduling interval. For all entries of flows in this list the following function *schedule _PDU* preferably is called. Return.

*Schedule_PDU:*

This is the actual QoS-scheduling step according to some scheduling disciplines, as discussed above, the PDU may receive a timestamp and is inserting to the service list with regard to that priority. Return.

*MAC-Scheduler:*

It is iterated over all resources, wherein in GPRS-based systems these are up to eight timeslots for one carrier. For each timeslot preferably the following steps are performed:

1) Requesting a read access to the service-list and accessing the first PDU-element;
2) Accessing the PDU-element and testing it for constraints. These are in the given example whether the ARQ-window allows for further transmissions and whether the timeslot allocation for this PDU-flow allows for transmission on the currently examined timeslot;
3) If the test is unsuccessful, skipping to the next PDU in the serving list and going to step 2). If the end of the list is reached and hence there are no schedulable PDUs available, selecting a padding RLC-block and proceeding with step 6);
4) If the test is successful, performing a request for protocol functionality. For a GPRS this would lead to a segmentation of one RLC-block with the currently used coding scheme. This RLC-block receives its header and its sequence number. If ARQ is performed on this flow, the RLC-block is given to ARQ to get buffered. The block creation is finished by CRC-creation. The RLC-block is returned to the MAC-scheduler means.
5) The uplink scheduler is polled to provide an USF for the actual timeslot, provided that the block period is not yet allocated by a RRBP.
6) If the segmentation in step 4) has received the last RLC-block of the PDU, thus if the PDU just receives its finishing service, the next PDU from this PDU-flow has to be scheduled. If a PDU is available in the flow queue then the first PDU has to be taken and it has to be send to *Schedule_PDU.* If there is no PDU available, the flow is marked as being inactive.
7) The MAC-scheduler functionality buffers the received block for transmission on the recent timeslot and the next timeslot gets scheduled from step 1) until the last timeslot is reached.
8) There is exactly one DL-RLC-block scheduled for each timeslot. Going to *WAIT-STATE.*

It has to be mentioned however, that step 6) can also be performed at the end of the MAC-scheduling cycle. The difference is that with the proposed solution it is possible for a flow to schedule its new PDU with such high priority to get service within this MAC-interval on the subsequent timeslots.

Furthermore it has to be mentioned, that based on the case the system finds itself anywhere else but in *WAIT-STATE,* when the MAC-interrupt arrives, this indicates an overload situation for which solutions are outlined in the next paragraph.

Overload protection

With regard to the overload protection, the system has to be designed preferably to allow for the worst case scenario, where the maximum number of operations is performed. This could be the case where all inactive flows became active in one cycle, the case were every MAC-scheduling access finds the last PDU in the queue as schedulable and/or where for every RLC-creation a new PDU is scheduled.

If this performance can not be guaranteed or if the processing power has to be shared with other processes of unpredictable performance requirements there should be an overload protection. In the case of overload, the system can not complete its task in one scheduling interval, for example in the above sample implementation the scheduling means will find itself not in *WAIT-STATE* when it receives a MAC-scheduling interrupt.

As a consequence, every timeslot is preferably initialised with a dummy-RLC-block that can be sent without consequence. Furthermore, this event will be recognised and a performance alarm to a central instance is given, such as for example to the radio resource management (RRM) unit. This will lead admission control to lower accepted load or even cut exiting connections. Finally, the current timeslot operation is continued and the RLC-block is scheduled to the formerly active timeslot. Then it can be started again with the timeslot 0 (TS0) but not further than the just calculated timeslot. Thereafter it has to go back to *WAIT-STATE* to give the system time to become balanced again.

Conclusion

Summarising the above a number of benefits can be achieved which are in substantial all stated for a given resource allocation. This means that once the resource allocation, such as for example the timeslot assignment for TBF is made and not changed the described inventive approach achieves in particular a fair bandwidth distribution among flows, the support for flexible resource allocation algorithms, radio channel transparency for smoothed channel bandwidth variation, in particular such that the effectively achieved MAC-capacity is transparently available for all flows on this timeslot, and/or the benefit of immediate system response upon LLC-frame arrival with precedence semantics supporting RT-services, such as to achieve RLC-interleaving necessary for RT-services, and on the other hand RLC-interleaving of flows in the same precedence class is avoided from minimised average LLC-delay.

**Claims**

1. A method for improving in a multi-layer packet switching network or system quality of service (QoS) scheduling having a rate-conserving scheduling functionality based on two scheduling layers operating on two granularities in protocol data units (PDU) of at least one incoming data flow, the method comprises the steps of:

    - maintaining of QoS requirements and determining of a service order for the protocol data units (PDU) by the upper scheduling layer (LLC-scheduler),
    - implementing of packet switching based, in particular GPRS-based and/or EGPRS-based, constraints by the lower scheduler layer (MAC-scheduler),
    - selecting of service ordered protocol data units (PDU) on demand by the lower scheduling layer (MAC-scheduler) in dependence on these constraints, in particular for efficiently allocating timeslots for the data flows, and
    - serving the selected protocol data units (PDU) by the lower scheduling layer (MAC-scheduler).

2. Method of claim 1, further **characterised by** the steps of

    - monitoring the achieved data throughput by the lower scheduling layer (MAC-Scheduler) and
    - deducting a scheduling order in dependence of that monitored data throughput.

3. Method of claim 1 or 2, further comprising the step of

    - strictly serving the protocol data units (PDU) in dependence on definable precedence classes based on system constraints related to the protocol data units (PDU) and/or the step of
    - defining at least one precedence semantics according to which protocol data units (PDU) of different precedence classes are served.

4. Method of claim 1, 2 or 3, further comprising the step of

    - giving selectable protocol data units (PDU), in particular of a real-time application and/or signalling traffic, preferential service.

5. Method of any of claims 1 to 4, further comprising the step of

    - scheduling in the lower scheduling layer (MAC-scheduler) one selected protocol data unit (PDU) from each data flow after another
    or the step of
    - scheduling in the lower scheduling layer (MAC-scheduler) the protocol data units (PDU) from one selected data flow prior to the scheduling of the protocol data units (PDU) from an other selected data flow.

6. Method of any of claims 1 to 5, further comprising the steps of

    - defining in dependence on system constraints precedence classes and
    - providing for each precedence class a respective service order of selected protocol data units (PDU).

7. Method of any of claims 1 to 6, further comprising the step of

    - ordering the protocol data units (PDU) respectively in dependence on timeslot allocation constraints.

8. Multi Layer packet switching network or system, in particular a GPRS-based and/or EGPRS-based network or system, adapted to perform the method according to any of claims 1 to 7, the apparatus comprises at least one transceiver having

- at least two scheduling means each of which is operating on a different granularity in protocol data units (PDU) of at least one incoming data flow,
- wherein the upper layer means (LLC-scheduler) comprises means for the maintaining of QoS requirements and the determining of a service order for the protocol data units (PDU) and
- wherein the lower layer means (MAC-scheduler) comprises means for implementing packet switching based system constraints,

means for selecting service ordered protocol data units (PDU) in dependence on these constraints, in particular for efficiently allocating timeslots for the data flows, and means for serving the selected protocol data units (PDU).

9. Apparatus, in particular incorporated within a mobile station and/or a base transceiver station, **characterised by** a transceiver for using in a network or system according to claim 8.

10. Implementation software product for performing the method of any of the claims 1 to 7, in particular within the network or system of claim 8.

## Fig. 1

Logical flows

PDU flow-queues

PDU (QoS)-scheduler

MAC-scheduler

PHY-layer

## Fig. 2

Input

asyn.feedback

g

c

Some protocol functionality

a   b

d

Output

async.output

e

f

Polling receiver

**Fig. 3**

110

LLC-scheduler

100

RLC-request for a
constraint resource (TS)

Segmentation & ARQ

MAC-scheduler

EP 1 376 948 A1

*Fig. 4*

EP 1 376 948 A1

# Fig. 5

**TBF-queues with LLC-frames**

**Search**

*100*

*100*

*100*

**TS-allocation of TBFs/LLC-frames**

EP 1 376 948 A1

Fig. 6

RLC #7     RLC #8

100

P2

130

P1

130

Result
on TS

TS0   TS1   TS2   TS3   TS4   TS5   TS6   TS7

EP 1 376 948 A1

# Fig. 7

TS

100

RT-traffic-precedence

QoS-bandwidth

BE-traffic

EP 1 376 948 A1

| | **European Patent** | **EUROPEAN SEARCH REPORT** | **Application Number** |
| --- | --- | --- | --- |
| | **Office** | | EP 02 25 4381 |

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
| --- | --- | --- | --- |
| X | KEE CHAING CHUA ET AL: "Wireless broadband communications: some research activities in Singapore" IEEE COMMUNICATIONS MAGAZINE, NOV. 1999, IEEE, USA, [Online] vol. 37, no. 11, pages 84-90, XP002224207 ISSN: 0163-6804 Retrieved from the Internet: <URL:http://www.cwc.nus.edu.sg/~cwcpub/zfiles/comm.pdf> [retrieved on 2002-12-05] * page 88, right-hand column, paragraph 5 - page 89, left-hand column, paragraph 2 * --- | 1-10 | H04L12/56 H04Q7/22 |
| X | PETRAS D ET AL: "Joint performance of DSA++ MAC protocol and SR/D-ARQ protocol for wireless ATM under realistic traffic and channel models" COMPUTER NETWORKS, ELSEVIER SCIENCE PUBLISHERS B.V., AMSTERDAM, NL, vol. 31, no. 9-10, 7 May 1999 (1999-05-07), pages 903-918, XP004304527 ISSN: 1389-1286 * page 904, left-hand column, paragraph 4 - page 906, right-hand column, paragraph 3 * * figure 1 * ----- | 1-10 | TECHNICAL FIELDS SEARCHED (Int.Cl.7) H04L H04Q |

The present search report has been drawn up for all claims

| Place of search | Date of completion of the search | Examiner |
| --- | --- | --- |
| BERLIN | 9 December 2002 | Eraso Helguera, J |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)